# EUROPÄISCHE PATENTANMELDUNG

(11) **EP 3 282 694 A1**
(43) Veröffentlichungstag der Anmeldung: **14.02.2018**
(21) Anmeldenummer: 17175299.1
(22) Anmeldetag: 09.06.2017
(51) Int. Cl.: H04N 7/18

(54) **VERFAHREN UND VORRICHTUNG ZUR ANSTEUERUNG EINER SICHERHEITSRELEVANTEN FUNKTION EINES FAHRZEUGS**

(30) Priorität: 11.08.2016 DE 102016214939
(71) Anmelder: Robert Bosch GmbH, 70442 Stuttgart (DE)
(72) Erfinder: Schleser, Roland, 74232 Abstatt (DE)

(57) **Zusammenfassung**

Verfahren (200) zur Ansteuerung einer sicherheitsrelevanten Funktion eines Fahrzeugs mit den Schritten:
• Erfassen (210) von Kamerabildern mit Hilfe einer Kamera (101),
• Erzeugen (220) von Testbildern, wobei jedes Testbild ein vorgegebenes Muster aufweist,
• Erzeugen (230) eines Datenstroms, der mehrere Kamerabilder und mehrere Testbilder umfasst,
• Erfassen (240) des Datenstroms mit Hilfe einer Steureinheit (102),
• Erzeugen (250) eines ersten Signals in Abhängigkeit einer Auswertung des Datenstroms, wobei das erste Signal eine Fehlerfreiheit des Datenstroms repräsentiert,
• Erzeugen (260) eines Ansteuersignals (105) in Abhängigkeit des ersten Signals und eines dritten Signals, wobei das dritte Signal das Vorliegen einer kritischen Situation repräsentiert, und
• Auslösen (270) einer sicherheitsrelevanten Funktion des Fahrzeugs in Abhängigkeit des Ansteuersignals (105).

## Beschreibung

### Stand der Technik

Die Erfindung betrifft ein Verfahren und eine Vorrichtung zur Ansteuerung einer sicherheitsrelevanten Funktion eines Fahrzeugs.

Das Dokument DE 10 2006 028 376 A1 beschreibt ein Verfahren und eine Vorrichtung zur Markierung von zweidimensionalen georeferenzierten Bilddaten. Dabei werden die Bilddaten mit einer Markierung versehen, die für den Betrachter unsichtbar bleibt und bei in der Praxis vorkommenden Verarbeitungsschritten wie Farbraumkonvertierungen, affinen Transformationen, Digital-Analog- oder Analog-Digital-Konvertierungen erhalten bleibt. Die auf diese Weise markierten Bilddaten werden dazu verwendet, illegal hergestellte Kopien von Bilderzeugnissen zu erkennen.

Das Dokument DE 10 2013 211 571 A1 beschreibt ein Verfahren zur Bestimmung der Qualität eines Mediadatenstroms, bei dem ein Datenstrom im Sinne eines Videos durch Vergleich mit Referenzbildern aus einem parallel laufenden oder parallel existierenden Referenzvideo qualitativ analysiert wird.

Das Dokument DE 10 2012 102 886 A1 beschreibt ein Verfahren und ein System zur automatischen Korrektur eines Videosignals. Es wird hierbei die Qualität eines Datenstroms analysiert und unter Verwendung eines Testbildsignals im Bereich eines Vorspanns zum eigentlichen Datenstrom auf einem Magnetband angepasst bzw. korrigiert.

Kameras werden aufgrund von sinkender Rechenleistung vermehrt in sicherheitsrelevanten Systemen in Fahrzeugen eingesetzt, beispielsweise kamerabasiertes manuelles oder automatisches Ausparken oder Bremsen auf Basis von erkannten Objekten. Die Bilddaten dieser Kameras können dabei jedoch fehlerbehaftet sein, wobei die Fehler ihren Ursprung in der Elektrik bzw. Elektronik des Bildverarbeitungssystems finden. Je nach Anwendung sind diese fehlerbehafteten Bilddaten sicherheitskritisch. Dabei lassen sich verschiedene Fehlerbilder unterscheiden, beispielsweise erhöhte Latenz, Artefakte, Einfrieren des Bildinhalts auf einer beliebigen Arbeitsstufe oder die horizontale oder vertikale Spiegelung des Bildinhalts.

Zur Vermeidung dieser Fehlerbilder sind verschiedene Sicherheitsmechanismen bekannt, die einen Teil dieser Fehlerbilder erkennen, beispielsweise im Bild unsichtbar lokal eingeprägte veränderliche Bildzähler oder unsichtbar lokal eingeprägte Muster, Löschen von unbenutzten Bildspeichern oder Zählen der aktuell eingelesenen Bilder, um die Latenz einzuschätzen.

Nachteilig ist hierbei, dass die Fehlerbilderkennung jeweils nur ein Fehlerbild erkennen kann.

Die Aufgabe der Erfindung ist es, eine zuverlässige Absicherung des Bildpfades von der Kamera bis zur Anzeige zu ermöglichen.

### Offenbarung der Erfindung

Das erfindungsgemäße Verfahren zur Ansteuerung einer sicherheitsrelevanten Funktion eines Fahrzeug umfasst das Erfassen von Kamerabildern mit Hilfe einer Kamera und das Erzeugen von Testbildern, wobei die Testbilder vorgegebene Muster aufweisen. Das Verfahren umfasst weiterhin das Erzeugen eines Datenstroms, wobei der Datenstrom mehrere Kamerabilder und mehrere Testbilder umfasst. Der Datenstrom wird mit Hilfe einer Steuereinheit erfasst und ausgewertet. In Abhängigkeit der Auswertung des Datenstroms wird ein erstes Signal erzeugt, das eine Fehlerfreiheit des Datenstroms repräsentiert. Mit anderen Worten, der Datenstrom der eine Kombination aus mehreren Kamerabildern und mehreren Testbilder ist, weist keine Fehler auf. Die Fehlerfreiheit wird ab dem Zeitpunkt der Erzeugung des Datenstroms bis zum Erzeugen des ersten Signals garantiert. Das Verfahren umfasst weiterhin das Erzeugen eines Ansteuersignals in Abhängigkeit des ersten Signals und eines dritten Signals, wobei das dritte Signal das Vorliegen einer kritischen Situation repräsentiert und das Auslösen der sicherheitsrelevanten Funktion des Fahrzeugs in Abhängigkeit des Ansteuersignals.

Der Vorteil ist hierbei, dass Störeinflüsse, die aufgrund der Elektrik bzw. Elektronik im Bildverarbeitungspfad der Steuereinheit erzeugt werden, erkannt werden, sodass sicherheitsrelevante Funktionen des Fahrzeugs zuverlässig auf der Basis von Kameradaten durchgeführt werden können.

In einer Weiterbildung ist das vorgegebene Muster des Testbilds ortsabhängig und/oder zeitabhängig.

Vorteilhaft ist hierbei, dass eine Verwürfelung von Bildinhalten erkennbar ist.

In einer weiteren Ausgestaltung umfasst das vorgegebene Muster ein Wasserzeichen.

In einer Weiterbildung wird der Datenstrom aus mehreren Kamerabildern und mehreren Testbildern gebildet, wobei jeweils ein Kamerabild und jeweils ein Testbild abwechselnd aufeinanderfolgen.

Vorteilhaft ist hierbei, dass keine sichtbaren Bildartefakte erzeugt werden.

In einer weiteren Ausgestaltung wird der Datenstrom aus mehreren Kamerabildern und mehreren Testbildern gebildet, wobei jedem Kamerabild ein Testbild überlagert bzw. eingeprägt wird.

Der Vorteil ist hierbei, dass Fehlerbilder in jedem einzelnen Bild erkannt werden können, sodass eine lückenlose Absicherung jedes einzelnen Bildes erfolgen kann.

In einer Weiterbildung wird das Testbild mit Hilfe der Kamera erzeugt, insbesondere mit einem Imager der Kamera.

Vorteilhaft ist hierbei, dass der Bildverarbeitungspfad von der Kamera bis zur Ausgabe eines ersten Signals komplett gegen Störeinflüsse, die durch die Elektrik bzw. Elektronik der Steuereinheit erzeugt werden, geschützt wird.

In einer weiteren Ausgestaltung wird ein zweites Signal in Abhängigkeit der Auswertung des Datenstroms erzeugt, wobei das zweite Signal eine Anzeigeeinheit ansteuert.

Weitere Vorteile ergeben sich aus der nachfolgenden Beschreibung von Ausführungsbeispielen bzw. aus den abhängigen Patentansprüchen.

### Kurze Beschreibung der Zeichnungen

Die vorliegende Erfindung wird nachfolgend anhand bevorzugter Ausführungsformen und beigefügter Zeichnungen erläutert. Es zeigen:
- Figur 1: eine Vorrichtung zur Ansteuerung einer sicherheitsrelevanten Funktion eines Fahrzeugs und
- Figur 2: ein Verfahren zur Ansteuerung einer sicherheitsrelevanten Funktion des Fahrzeugs.

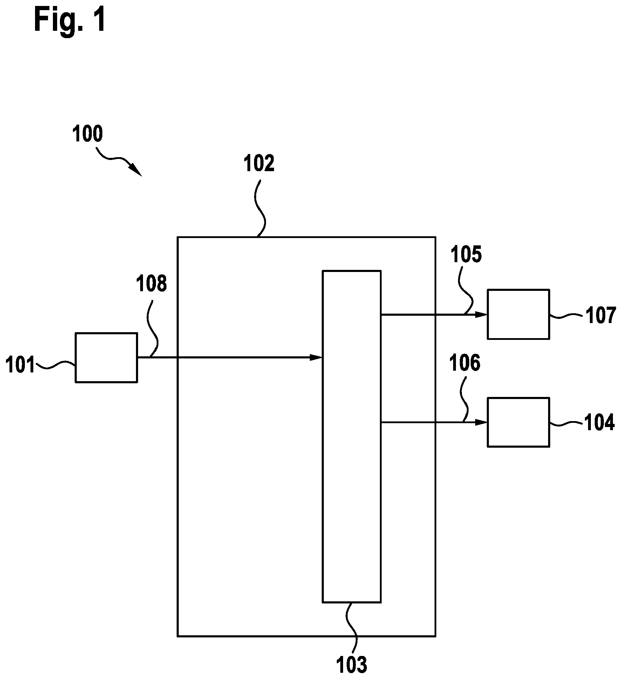

Figur 1 zeigt eine Vorrichtung 100 zur Ansteuerung einer sicherheitsrelevanten Funktion eines Fahrzeugs. Die Vorrichtung 100 umfasst mindestens eine Kamera 101, eine Steuereinheit 102, mindestens eine Verarbeitungseinheit 103, eine Anzeigeeinheit 104 und ein Mittel 107 zur Umsetzung einer sicherheitsrelevanten Funktion, beispielsweise einen Notbremsassistent oder einen Gurtstraffer. Die Steuereinheit 102 erfasst einen Datenstrom 108, der sich aus Kamerabildern und Testbildern zusammensetzt. Die Verarbeitungseinheit 103 erzeugt ein erstes Signal in Abhängigkeit einer Auswertung des Datenstroms. Dabei umfasst das erste Signal die Information, ob der Datenstrom fehlerfrei ist, beispielsweise als Binärcode. Die Ziffer "0" bedeutet fehlerbehaftet und die Ziffer "1" fehlerfrei. In Abhängigkeit des ersten Signals und eines dritten Signals erzeugt die Verarbeitungseinheit 103 ein Ansteuersignal 105, das die sicherheitsrelevante Funktion auslöst.

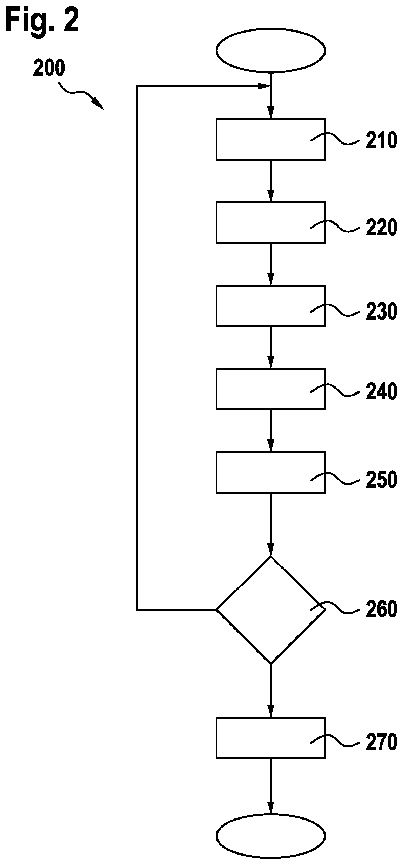

Figur 2 zeigt ein Verfahren 200 zur Ansteuerung einer sicherheitsrelevanten Funktion eines Fahrzeugs. Das Verfahren 200 startet mit einem Schritt 210, indem mindestens ein Kamerabild erfasst wird. In einem folgenden Schritt 220 wird mindestens ein Testbild erzeugt. Jedes Testbild weist ein vorgegebenes Muster auf. Das vorgegebene Muster kann in einer Haupterstreckungsrichtung einer Haupterstreckungsebene wiederholt werden, beispielsweise in x- und/oder y-Richtung. Das vorgegebene Muster muss unsymmetrisch sein. In einem folgenden Schritt 230 wird ein Datenstrom erzeugt, der mehrere Kamerabilder und mehrere Testbilder umfasst. In einem folgenden Schritt 240 wird der Datenstrom von einer Steuereinheit erfasst. In einem folgenden Schritt 250 wird ein erstes Signal erzeugt, indem der Datenstrom ausgewertet wird, insbesondere am Ende der Bildkette bzw. Bildpfads, d. h. am Ende der Verarbeitung der Bildinhalte. Dazu wird eine minimal relevante Bildausschnittsgröße festgelegt innerhalb derer eine Prüfung auf inhaltliche Integrität durchgeführt wird. Dabei wird erfasst, ob ein vorhandenes Artefakt einen vorgegebenen Schwellenwert überschreitet. Optional wird eine Prüfung auf räumliche Integrität durchgeführt. Außerdem wird die Aktualität des Bildinhalts erfasst, beispielsweise durch einen Zeitstempel. Mit anderen Worten sowohl die unsichtbar eingeprägten Informationen als auch die Testbilder können zur Erhöhung der Diagnosedeckung zeitabhängig sein. In einem folgenden Schritt 260 wird ein Ansteuersignal erzeugt, wenn das erste Signal den Zustand fehlerfrei anzeigt und ein drittes Signal vorliegt, das ein Vorliegen einer kritischen Situation anzeigt, beispielsweise zu geringer Abstand zu einem erkannten Objekt bzw. Kollisionskurs mit einem weiteren Fahrzeug. Zeigt das erste Signal den Zustand fehlerbehaftet an, so wird das Verfahren beendet oder startet erneut mit Schritt 210. In einem folgenden Schritt 270 wird eine sicherheitsrelevante Funktion in Abhängigkeit des Ansteuersignals ausgeführt.

In einem Ausführungsbeispiel weist der Datenstrom mehrere Kamerabilder und mehrere Testbilder auf, wobei jeweils ein Kamerabild und jeweils ein Testbild abwechselnd aufeinanderfolgen. Mit anderen Worten der Datenstrom wird erzeugt, indem jeweils einem Kamerabild ein Testbild nachfolgt.

In einem weiteren Ausführungsbeispiel weist der Datenstrom ebenfalls mehrere Kamerabilder und mehrere Testbilder auf, wobei jedem Kamerabild ein Testbild überlagert ist. Das Testbild umfasst beispielsweise ein Wasserzeichen.

Dieses sollte für die Anwendung unsichtbar sein, d. h. es wird beispielsweise in das least significant Bit des Datenstroms kodiert. Dabei ist darauf zu achten, dass das Wasserzeichen ausreichend robust ist, sodass trotz verlustbehafteter Bildtransformationen/-kompressionen das Wasserzeichen nicht verändert wird. Der Begriff robust bedeutet in diesem Zusammenhang, dass die im Bildpfad auftretenden Transformationen vorab bekannt sind, sodass redundante Bildinformationen erzeugt werden können. Beispiele hierfür sind eine Codierung mit halber Auflösung bei der Transformation des Bildes auf die halbe Größe oder bei Speicherung von Farbinformationen. Alternativ und insbesondere wird die Codierung im niedrigsten Bit, das erhalten bleibt hinterlegt bzw. gespeichert. Mit Hilfe des unsichtbaren Wasserzeichens kann somit eine Artefakterkennung durchgeführt werden.

In einem weiteren Ausführungsbeispiel werden Spalten und Zeilen hinzugefügt, die später heraustransformiert werden, z. B. jede neunte Spalte und jede neunte Zeile. Es werden dabei keine Einzelpixelartefakte erkannt, aber die maximale Größe unerkannter Artefakte wird limitiert. Ein Offset innerhalb der N Zeilen kann zyklich geändert werden, damit permanente Pixelfehler innerhalb von N Zyklen erkannt werden. Diese spezielle Ausführungsform hat den Vorteil, dass der Rechenaufwand gering ist und dass im sichtbaren Bild keine Spuren der Prüfinformationen bleiben, da die Zeilen/Spalten entfernt werden. Optional können Testbilder zeitlich eingefügt werden, sodass ein dreidimensionales Testgitter entsteht. Der Vorteil hierbei ist, dass permanente Fehler in einzelnen Pixeln erkannt werden, wodurch eine sehr große Diagnosedeckung erfolgt, die für die funktionale Sicherheit wichtig ist.

In einem Ausführungsbeispiel ist das vorgegebene Muster ortsabhängig. Zur Erzeugung dieses Musters müssen die Ortsfrequenzen so gewählt werden, dass das vorgegebene Muster auch beim Verlust der Auflösung, d. h. beim Herauszoomen, noch erkennbar ist.

Alternativ ist das vorgegebene Muster zeitabhängig. Mit anderen Worten für jeden Frame wird ein anderes Muster verwendet, um Wiederholungen von Frames zu erkennen.

Alternativ ist das vorgegebene Muster orts- und zeitabhängig. Dabei wird das Muster in x-, y-Richtung und zeitabhängig variiert, um Verschiebungen und Vertauschungen von Bildbereichen sowie Wiederholungen zu erkennen.

Alternativ ist das vorgegebene Muster an die Verwendung von geometrischen Bildtransformationen angepasst. Hierzu wird beispielsweise im Laufe der Bildverarbeitung die Auflösung in jeder Richtung halbiert. Somit ist es ausreichend, wenn das Muster mit halber Auflösung aufgeprägt wird.

In einem Ausführungsbeispiel werden bei bereits verarbeiteten Bildern Anteile festgelegt, die nicht erneut auf das Testmuster/ Testbild untersucht werden. Dies betrifft beispielsweise nachträglich eingefügte Overlays wie Schrift oder gerenderte Fahrzeugmodelle.

## Patentansprüche

1. Verfahren (200) zur Ansteuerung einer sicherheitsrelevanten Funktion eines Fahrzeugs mit den Schritten:
• Erfassen (210) von Kamerabildern mit Hilfe einer Kamera (101),
• Erzeugen (220) von Testbildern, wobei jedes Testbild ein vorgegebenes Muster aufweist,
• Erzeugen (230) eines Datenstroms, der mehrere Kamerabilder und mehrere Testbilder umfasst,
• Erfassen (240) des Datenstroms mit Hilfe einer Steuereinheit (102),
• Erzeugen (250) eines ersten Signals in Abhängigkeit einer Auswertung des Datenstroms, wobei das erste Signal eine Fehlerfreiheit des Datenstroms repräsentiert,
• Erzeugen (260) eines Ansteuersignals (105) in Abhängigkeit des ersten Signals und eines dritten Signals, wobei das dritte Signal das Vorliegen einer kritischen Situation repräsentiert, und
• Auslösen (270) der sicherheitsrelevanten Funktion des Fahrzeugs in Abhängigkeit des Ansteuersignals (105).

2. Verfahren (200) nach Anspruch 1, **dadurch gekennzeichnet, dass** das vorgegebene Muster jedes Testbilds ortsabhängig und/ oder zeitabhängig ist.

3. Verfahren (200) nach einem der Ansprüche 1 oder 2, **dadurch gekennzeichnet, dass** das vorgegebene Muster ein Wasserzeichen umfasst.

4. Verfahren (200) nach einem der vorhergehenden Ansprüche, **dadurch gekennzeichnet, dass** der Datenstrom erzeugt wird, indem jeweils ein Kamerabild und jeweils ein Testbild abwechselnd aufeinanderfolgen.

5. Verfahren (200) nach einem der Ansprüche 1 bis 3, **dadurch gekennzeichnet, dass** der Datenstrom erzeugt wird, indem jedem Kamerabild ein Testbild überlagert wird.

6. Verfahren (200) nach einem der vorhergehenden Ansprüche, **dadurch gekennzeichnet, dass** die Testbilder mit Hilfe der Kamera (101) erzeugt werden, insbesondere mit Hilfe eines Imagers der Kamera (101).

7. Verfahren (200) nach einem der vorhergehenden Ansprüche, **dadurch gekennzeichnet, dass** ein zweites Signal (106) in Abhängigkeit der Auswertung des Datenstroms erzeugt wird, wobei das zweite Signal eine Anzeigeeinheit (104) ansteuert.

8. Vorrichtung (100) zur Ansteuerung einer sicherheitsrelevanten Funktion eines Fahrzeugs mit einer Kamera (101) und einer Steuereinheit (102), **dadurch gekennzeichnet, dass** die Steuereinheit (102) eingerichtet ist einen Datenstrom zu erfassen, der mehrere Kamerabilder und mehrere Testbilder umfasst, wobei die Steuereinheit (102) eingerichtet ist
• ein erstes Signal zu erzeugen, das eine Fehlerfreiheit des Datenstroms repräsentiert,
• ein Ansteuersignal (105) in Abhängigkeit des ersten Signals und eines dritten Signals zu erzeugen, wobei das dritte Signal das Vorliegen einer kritischen Situation repräsentiert, und
• die sicherheitsrelevante Funktion des Fahrzeugs in Abhängigkeit des Ansteuersignals (105) anzusteuern.
